(19) Europäisches Patentamt

European Patent Office

Office européen des brevets

(11) **EP 3 663 153 A1**

(12) # EUROPEAN PATENT APPLICATION
published in accordance with Art. 153(4) EPC

(43) Date of publication:
**10.06.2020 Bulletin 2020/24**

(21) Application number: **18851228.9**

(22) Date of filing: **23.08.2018**

(51) Int Cl.:
*B60W 30/095* (2012.01)    *B60W 30/09* (2012.01)
*B60W 50/00* (2006.01)     *B62D 6/00* (2006.01)
*G08G 1/16* (2006.01)

(86) International application number:
**PCT/JP2018/031103**

(87) International publication number:
**WO 2019/044645 (07.03.2019 Gazette 2019/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2017 JP 2017165246**

(71) Applicant: **Mazda Motor Corporation
Aki-gun
Hiroshima 730-8670 (JP)**

(72) Inventors:
• **GOTO Takashi
Aki-gun
Hiroshima 730-8670 (JP)**
• **OHMURA Hiroshi
Aki-gun
Hiroshima 730-8670 (JP)**

• **HOSODA Kouji
Aki-gun
Hiroshima 730-8670 (JP)**
• **TACHIHATA Tetsuya
Aki-gun
Hiroshima 730-8670 (JP)**
• **NAKAGAMI Takashi
Aki-gun
Hiroshima 730-8670 (JP)**
• **NISHIJO Yuma
Aki-gun
Hiroshima 730-8670 (JP)**
• **KAWAHARA Yasuhiro
Aki-gun
Hiroshima 730-8670 (JP)**
• **KATAYAMA Shota
Aki-gun
Hiroshima 730-8670 (JP)**

(74) Representative: **Müller-Boré & Partner
Patentanwälte PartG mbB
Friedenheimer Brücke 21
80639 München (DE)**

(54) # VEHICLE CONTROL DEVICE

(57)    Disclosed is a vehicle control device which comprises a traveling course control part 10a to update a target traveling course R, and an automatic emergency avoidance control part (10b, 10e) to execute automatic emergency avoidance control processing for automatically operating a given control system to avoid collision with an obstacle. The part 10a corrects the target traveling course R to calculate plural corrected traveling course candidates for avoiding the obstacle, and evaluates the candidates by an evaluation function J to select one of the candidates as a corrected traveling course. The part 10a generates a first request signal for allowing the vehicle 1 to travel along the corrected traveling course. The emergency avoidance course control part (10b, 10e) generates a second request signal. The vehicle control device further comprises an output control part 10d to output the first or second request signal to the given control system.

**EP 3 663 153 A1**

# FIG.2

```
                                              10

┌────────────────────────────────────────┐   ┌──────────────────────────────┐
│  10c          ECU    10a     10d        │   │  CONTROL SYSTEM              │
│                                         │   │                       ┌─31   │
│  ┌──┐    ┌─────────────┐   ┌──┐          │   │  ┌───────────────────────┐   │
│  │IN│    │  TRAVELING  │   │OU│          │   │  │  ENGINE CONTROL       │   │
│  │PU│    │   COURSE    │   │TP│          │   │  └───────────────────────┘   │
│  │T │    │CONTROL PART │   │UT│          │   │                       ┌─32   │
│  │PR│───▶│             │──▶│  │          │   │  ┌───────────────────────┐   │
│  │OC│    └─────────────┘   │CO│          │───│  │  BRAKE CONTROL        │   │
│  │ES│            10b       │NT│          │   │  └───────────────────────┘   │
│  │SI│    ┌─────────────┐   │RO│          │   │                       ┌─33   │
│  │NG│    │  AUTOMATIC  │   │L │          │   │  ┌───────────────────────┐   │
│  │PA│───▶│ANTI-COLLISION│─▶│PA│          │   │  │  STEERING CONTROL     │   │
│  │RT│    │CONTROL PART │   │RT│          │   │  └───────────────────────┘   │
│  └──┘    └─────────────┘   └──┘          │   │                              │
└────────────────────────────────────────┘   └──────────────────────────────┘
```

Sensor/Switch information, etc.

**Description**

TECHNICAL FIELD

The present invention relates to a vehicle control device, and more particularly to a vehicle control device suited to avoidance of danger during vehicle traveling.

BACKGROUND ART

There has been proposed a technique of, during emergency obstacle avoidance, selecting one of breaking-based avoidance (based on only brake manipulation) and steering-based avoidance (based on only steering manipulation), according to a vehicle speed at that time, and calculating a target traveling course, using optimization processing (see, for example, the following Patent Document 1). In this technique, when the breaking-based avoidance is selected, conditions for the calculation will be simplified and limited to only a longitudinal (vehicle forward-rearward directional) motion. On the other hand, when the steering-based avoidance is selected, the conditions for the calculation will be simplified and limited to only a lateral (vehicle width directional) motion. As above, the technique allows a calculation load to be reduced during an emergency, so that it is possible to shorten a calculation time period while ensuring a high calculation accuracy.

CITATION LIST

[Patent Document]

Patent Document 1: JP 2010-155545A

SUMMARY OF INVENTION

[Technical Problem]

However, in some traveling conditions, there can arise a situation where the calculation of the target traveling course is not completed within a given calculation time period, and thereby an optimal solution of the target traveling course cannot be obtained (time-out). In this situation, no optimal target traveling course is obtained. Thus, there is a possibility of failing to execute an obstacle avoidance operation in a better manner.
The present invention has been made to solve the above problem, and an object thereof is to provide a vehicle control device capable of reliably avoiding an obstacle while calculating a target traveling course, at any time including during obstacle avoidance.

[Solution to Technical Problem]

In order to achieve the above object, the present invention provides a vehicle control device which comprises: a traveling course control part to iteratively update a target traveling course of a vehicle; and an automatic emergency avoidance control part to execute automatic emergency avoidance control processing for automatically operating a given control system including at least one of an engine control system, a brake control system and a steering control system of the vehicle to avoid collision with an obstacle, wherein: the traveling course control part is configured to, upon detection of the obstacle, execute traveling course correction processing of correcting the target traveling course so as to avoid the obstacle, wherein the traveling course control part is configured to, in the traveling course correction processing, correct the target traveling course to calculate a plurality of corrected traveling course candidates for avoiding the obstacle, and evaluate the corrected traveling course candidates with respect to the target traveling course by a given evaluation function to select, as a corrected traveling course, one of the corrected traveling course candidates according to the evaluation, and wherein the traveling course control part is configured to generate a first request signal for the given control system to allow the vehicle to travel along the corrected traveling course; and the automatic emergency avoidance control part is configured to execute the automatic emergency avoidance control processing, independently of the traveling course control part, to generate a second request signal for the given control system, and wherein the vehicle control device further comprises an output control part to receive each of the first request signal and the second request signal from a corresponding one of the traveling course control part and the automatic emergency avoidance control part, wherein the output control part is configured to output the first request signal or the second request signal to the given control system.
In the vehicle control device of the present invention having the above feature, upon detection of the obstacle, the traveling course control part operates to derive a corrected traveling course, and generate the first request signal for controlling the engine control system, the brake control system and/or the steering control system, based on the corrected traveling course. However, due to the processing of calculating an optimal corrected traveling course for obstacle avoidance, using the evaluation function, in addition to the processing of calculating the target traveling course, a calculation load can be excessively high in some traveling conditions, and there is a possibility of failing to deriving an optimal corrected traveling course within a calculation cycle period (updating cycle period) (time-out). In this case, there is a possibility of failing to avoid an obstacle in a better manner.

Therefore, in the present invention, the vehicle control device comprises the automatic emergency avoidance control part for avoiding collision with the obstacle, in addition to the traveling course control part. The traveling course control part is configured to execute high-load calculation processing such as traveling course calculation and corrected traveling course calculation. On the other hand, the automatic emergency avoidance control part may be configured to execute low-load calculation processing (i.e., calculation processing for engine, brake and/or steering controls for avoidance of collision with an obstacle). Thus, the automatic emergency avoidance control part can reliably complete the calculation processing within at least the updating cycle period.

Thus, in the present invention, even in a situation where the traveling course control part is incapable of deriving an optimal traveling course, obstacle avoidance can be reliably realized by the automatic emergency avoidance control part. This makes it possible to improve vehicle traveling safety.

Preferably, in the vehicle control device of the present invention, the output control part is configured to output the second request signal in priority to the first request signal. According to this feature, when receiving the two request signals (the first request signal and the second request signal), the output control part allows the brake control system to be operated according to the second request signal having higher reliability in terms of obstacle avoidance.

In the vehicle control device of the present invention, the automatic emergency avoidance control processing may be automatic anti-course-deviation control processing for operating the steering control system to avoid collision with an obstacle. Further, in the automatic anti-course-deviation control processing, the second request signal is not generated if the possibility of collision with the obstacle is low, even when the vehicle is determined to deviate from a driveling lane.

Preferably, in the vehicle control device of the present invention, the traveling course correction processing and the automatic emergency avoidance control processing are executed within a given calculation cycle period by a single CPU. According to this feature, although both the traveling course correction processing and the automatic emergency avoidance control processing are executed by a single CPU, it is possible to reliably avoid collision with an obstacle.

[Effect of Invention]

The present invention can provide a vehicle control device capable of reliably avoiding an obstacle while calculating the target traveling course, at any time including during obstacle avoidance.

BRIEF DESCRIPTION OF DRAWINGS

FIG. 1 is a configuration diagram of a vehicle control system according to a first embodiment of the present invention.
FIG. 2 is a control block diagram of the vehicle control system according to the first embodiment.
FIG. 3 is an explanatory diagram of a first traveling course in the first embodiment.
FIG. 4 is an explanatory diagram of a second traveling course in the first embodiment.
FIG. 5 is an explanatory diagram of a third traveling course in the first embodiment.
FIG. 6 is an explanatory diagram of obstacle avoidance control in the first embodiment.
FIG. 7 is an explanatory diagram showing a relationship between an allowable upper limit of a pass-by speed and a clearance between an obstacle and a vehicle in the obstacle avoidance control in the first embodiment.
FIG. 8 is an explanatory diagram of traveling course correction processing in the first embodiment.
FIG. 9 is an explanatory diagram of a vehicle model in the first embodiment.
FIG. 10 is a processing flow of driving support control in the first embodiment.
FIG. 11 is a processing flow of traveling course calculation processing in the first embodiment.
FIG. 12 is a processing flow of traveling course correction processing in the first embodiment.
FIG. 13 is a processing flow of automatic anti-collision control processing in the first embodiment.
FIG. 14 is a processing flow of system control processing in the first embodiment.
FIG. 15 is a control block diagram of a vehicle control system according to a second embodiment of the present invention.

FIG. 16 is a processing flow of driving support control in the second embodiment.
FIG. 17 is a processing flow of automatic anti-course-deviation control processing in the second embodiment.
FIG. 18 is a processing flow of system control processing in the second embodiment.

DESCRIPTION OF EMBODIMENTS

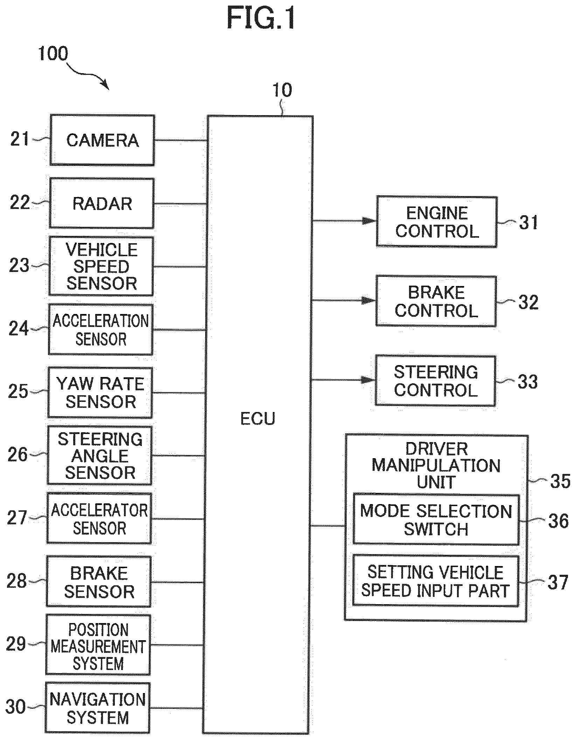

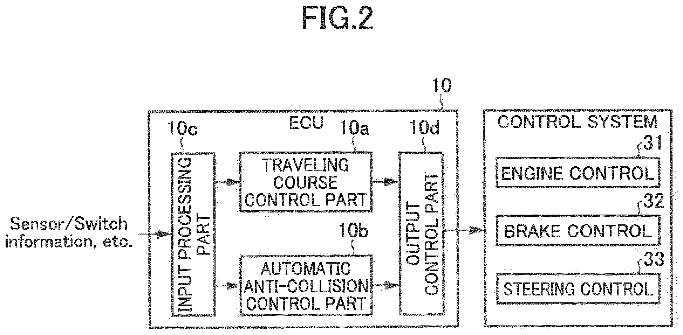

With reference to the accompanying drawings, a vehicle control system according to a first embodiment of the present invention will now be described. First of all, the configuration of the vehicle control system will be described with reference to FIGS. 1 and 2. FIG. 1 is a configuration diagram of the vehicle control system, and FIG. 2 is a control block diagram of the vehicle control system.

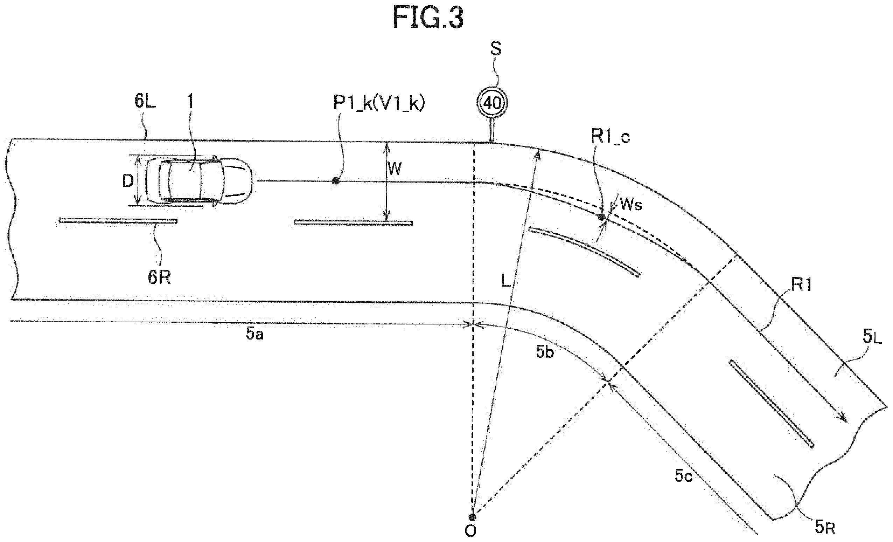

The vehicle control system 100 according to this embodiment is configured to provide different driving support controls to a vehicle 1 (see FIG. 3) in accordance with plural driving support modes, respectively. A driver can select a desired driving support mode from the driving support modes.

As shown in FIG. 1, the vehicle control system 100 is equipped in the vehicle 1, and comprises a vehicle control device (ECU) 10, plural sensors and switches, plural control sub-systems, and a driver manipulation unit 35 for allowing user input regarding the driving support modes. The plural sensors and switches include: a vehicle-mounted camera 21; a millimeter-wave radar 22; plural behavior sensors (a vehicle speed sensor 23, an acceleration sensor 24, and a yaw rate sensor 25) and plural behavior switches (a steering angle sensor 26, an accelerator sensor 27, and a brake sensor 28) for detecting the behavior of the vehicle; a position measurement system 29; and a navigation system 30. Further, the plural control sub-systems include an engine control system 31, a brake control system 32 and a steering control system 33.

The driver manipulation unit 35 is provided in a passenger compartment of the vehicle 1 such that it can be manipulated by the driver, and comprises: a mode selection switch 36 for selecting a desired driving support mode from the driving support modes; and a setting vehicle speed input part 37 for inputting a setting vehicle speed in accordance with the selected driving support mode. In response to manipulation of the mode selection switch 36 by the driver, a driving support mode selection signal according to the selected driving support mode is output. On the other hand, in response to manipulation of the setting vehicle speed input part 37 by the driver, a setting vehicle speed signal is output.

The ECU 10 is composed of a computer comprising a CPU, a memory storing therein various programs, and an input/output device. The ECU 10 is configured to be operable, based on the driving support mode selection signal, the setting vehicle speed signal, and signals received from the sensors and switches, to output request signals for appropriately operating an engine system, a brake system and a steering system, respectively, to the engine control system 31, the brake control system 32 and the steering control system 33.

The vehicle-mounted camera 21 is operable to take images around the vehicle 1 and output image data about the taken images. The ECU 10 is operable to identify an object (e.g., a vehicle, a pedestrian, a road, a demarcation line (a lane border line, a white road line or a yellow road line), a traffic light, a traffic sign, a stop line, an intersection, an obstacle or the like) based on the image data. Here, the ECU 10 may be configured to acquire information regarding such an object, from outside through an in-vehicle communication device, by means of transportation infrastructure, inter-vehicle communication, etc.

The millimeter-wave radar 22 is a measurement device for measuring the position and speed of the object (particularly, a preceding vehicle, a parked vehicle, a pedestrian, an obstacle or the like), and is operable to transmit a radio wave (transmitted wave) forwardly with respect to the vehicle 1 and receive a reflected wave produced as a result of reflection of the transmitted wave by the object. Then, the millimeter-wave radar 22 is operable, based on the transmitted wave and the received wave, to measure a distance between the vehicle 1 and the object, i.e., a vehicle-object distance, (e.g., inter-vehicle distance) and/or a relative speed of the object with respect to the vehicle 1. In this embodiment, instead of the millimeter-wave radar 22, a laser radar, an ultrasonic sensor or the like may be used to measure the vehicle-object distance and/or the relative speed. Further, the position and speed measurement device may be composed using a plurality of other sensors.

The vehicle speed sensor 23 is operable to detect an absolute speed of the vehicle 1.

The accelerator sensor 24 is operable to detect an acceleration (a longitudinal (forward-rearward directional) acceleration, and a lateral (width directional) acceleration) of the vehicle 1. Here, the acceleration includes a speed-increasing side (positive acceleration) and a speed-reducing side (negative acceleration).

The yaw rate sensor 25 is operable to detect a yaw rate of the vehicle 1.

The steering angle sensor 26 is operable to detect a turning angle (steering angle) of a steering wheel of the vehicle 1.

The accelerator sensor 27 is operable to detect a depression amount of an accelerator pedal of the vehicle 1.

The brake sensor 28 is operable to detect a depression amount of a brake pedal of the vehicle 1.

The position measurement system 29 is composed of a GPS system and/or a gyro system, and is operable to detect the position of the vehicle 1 (current vehicle position information).

The navigation system 30 stores therein map information, and is operable to provide the map information to the ECU 10. Then, the ECU 10 is operable, based on the map information and the current vehicle position information, to identify a road, an intersection, a traffic light, a building and others existing around the vehicle 1 (particularly, ahead of the vehicle 1 in the travelling direction). The map information may be stored in the ECU 10.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output.

The brake control system 32 comprises a controller for controlling a braking device of the vehicle 1. The ECU 10 is operable, when there is a need to decelerate the vehicle 1, to output, to the brake control system 32, a braking request signal for requesting to generate a braking force to be applied to the vehicle 1.

The steering control system 33 comprises a controller for controlling a steering device of the vehicle 1. The ECU 10 is operable, when there is a need to change the travelling direction of the vehicle 1, to output, to the steering control system 33, a steering direction change request signal for requesting to change a steering direction.

As shown in FIG. 2, the ECU 10 comprises a single CPU which functions as a traveling course control part 10a, an automatic anti-collision control part 10b, an input processing part 10c, and an output control part 10d. The input processing part 10c is operable to process input information received from the sensors/switched and the driver manipulation unit 35. Each of the traveling course control part 10a and the automatic anti-collision control part 10b is operable to execute calculation processing using the processed input information. In this embodiment, the ECU 10 is configured such that automatic anti-collision control which is highly-urgent emergency avoidance control is executed, independently of normal traveling course control. In this embodiment, the ECU 10 is configured such that the above plural functions are executed by a single CPC. Alternatively, the ECU 10 may be configured such that these functions are executed by a plurality of CPUs.

In this embodiment, the emergency avoidance control is control of generating a request signal for at least one or more of the engine control system 31, the brake control system 32 and the steering control system 33.

The traveling course control part 10a is operable to calculate a target traveling course based on the input information, and generate a first request signal for the engine control system 31, the brake control system 32, and/or the steering control system 33, to allow the vehicle 1 to travel on the target traveling course. The automatic anti-collision control part 10b is operable to generate a second request signal for the brake control system 32, to operate an emergency automatic brake to avoid collision with an obstacle, based on the input information. The output control part 10d is operable to selectively output the request signals received from the control parts 10a, 10b, to the engine control system 31, the brake control system 32, and/or the steering control system 33.

Next, the driving support modes in the vehicle control system 100 according to this embodiment will be described. In this embodiment, the driving support modes consist of four modes (a preceding vehicle following mode, an automatic speed control mode, a speed limiting mode, and a basic control mode).

< Preceding Vehicle Following Mode >

The preceding vehicle following mode is a mode in which the vehicle 1 is basically controlled to travel following a preceding vehicle, while maintaining a given inter-vehicle distance between the vehicle 1 and the preceding vehicle, and involves automatic steering control, automatic speed control (engine control and/or brake control), automatic obstacle avoidance control (the speed control and the steering control) to be executed by the vehicle control system 100.

In the preceding vehicle following mode, the steering control and the speed control are performed in different manners, depending on detectability of opposing lane edges, and the presence or absence of a preceding vehicle. Here, the term "opposing lane edges" means opposing edges (a demarcation line such as a white road line, a road edge, an edge stone, a median strip, a guardrail or the like) of a lane in which the vehicle 1 is traveling, i.e., borderlines with respect to a neighboring lane and sidewalk, or the like. The ECU 10 is operable, when serving as a traveling road edge detection part, to detect the opposing lane edges from the image data about the images taken by the vehicle-mounted camera 21. Alternatively, the ECU 10 may be configured to detect the opposing lane edges from the map information of the navigation system 30. However, for example, in a situation where the vehicle 1 is traveling on the plain on which there is no traffic lane, instead of on a well-maintained road, or in a situation where reading of the image data from the vehicle-mounted camera 21 is bad, there is a possibility of failing to detect the opposing lane edges.

As above, in this embodiment, the ECU 10 is configured to serve as the traveling road edge detection part. Alternatively, the vehicle-mounted camera 21 may be configured to detect the opposing lane edges to serve as the traveling road edge detection part, or may be configured to detect the opposing lane edges in cooperation with the ECU 10 to serve as the traveling road edge detection part.

Further, the ECU 10 is operable, when serving as a preceding vehicle detection part, to detect a preceding vehicle, based on the image data from the vehicle-mounted camera 21, and the measurement data from the millimeter-wave radar 22. Specifically, the ECU 10 is operable to detect a second vehicle which is traveling ahead of the vehicle 1, as a preceding vehicle, based on the image data from the vehicle-mounted camera 21. Further, in this embodiment, the ECU 10 is operable, when the inter-vehicle distance between the vehicle 1 and the second vehicle is determined to be equal to or less than a given value (e.g., 400 to 500 m), based on the measurement data from the millimeter-wave radar 22, to detect the second vehicle as a preceding vehicle.

As above, in this embodiment, the ECU 10 is configured to serve as the preceding vehicle detection part. Alternatively, the vehicle-mounted camera 21 may be configured to detect a second vehicle which is traveling ahead of the vehicle 1 to serve as the preceding vehicle detection part, or the preceding vehicle detection part may be composed of not only the ECU 10 but also the vehicle-mounted camera 21 and the millimeter-wave radar 22.

(Preceding Vehicle Following Mode: possible to detect opposing lane edges)

Firstly, in a situation where the opposing lane edges are detected, the steering control is performed such that the vehicle 1 is steered to travel along approximately the middle of the lane, and the speed control is performed such that the vehicle 1 maintains a setup vehicle speed (constant speed) preliminarily set by the driver through the use of the setting vehicle speed input part 37 or by the system 100 based on given processing. Here, when the setup vehicle speed is greater than a speed limit (which is determined according to a speed sign or the curvature of a curve), priority is given to the speed limit, so that the vehicle speed of the vehicle 1 is limited to the speed limit. When the speed limit is determined according to the curvature of a curve, it is calculated by a given calculation formula, wherein it is set to a lower value as the curvature of the curve becomes larger (a curvature radius of the curve becomes smaller).

Further, when the setup vehicle speed of the vehicle 1 is greater than the vehicle speed of a preceding vehicle, the speed control is performed such that the vehicle 1 follows the preceding vehicle while maintaining an inter-vehicle distance appropriate to a follow-up vehicle speed. Then, when the preceding vehicle being followed by the vehicle 1 disappears from ahead of the vehicle 1 due to lane change or the like, the speed control is performed such that the vehicle 1 maintains the setup vehicle speed, again.

(Preceding Vehicle Following Mode: impossible to detect opposing lane edges, and presence of preceding vehicle)

Secondly, in a situation where no opposing lane edges are detected, and there is a preceding vehicle, the steering control is performed such that the vehicle 1 follows a traveling trajectory of the preceding vehicle, and the speed control is performed such that the vehicle 1 follows the speed of the preceding vehicle on the traveling trajectory.

(Preceding Vehicle Following Mode: impossible to detect opposing lane edges, and absence of preceding vehicle)

Thirdly, in a situation where no opposing lane edges are detected, and there is no preceding vehicle (in a situation where it is unable to detect any demarcation line and follow any preceding vehicle), it is unable to determine a traveling position on a traveling road. In this situation, the driver manually controls vehicle steering and vehicle speed by manipulating the steering wheel, and the accelerator pedal and/or brake pedal so as to maintain or change a current traveling behavior (steering angle, yaw rate, vehicle speed, acceleration, or the like) according to the will of the driver.

In the preceding vehicle following mode, irrespective of the presence or absence of a preceding vehicle, and the detectability of opposing lane edges, the after-mentioned obstacle avoidance control (speed control and steering control) is additionally and automatically executed.

< Automatic Speed Control Mode >

The automatic speed control mode is a mode in which the speed control is performed such that the vehicle 1 maintains a given setup vehicle speed (constant speed) preliminarily set by the driver or the system 100, and involves the automatic speed control (the engine control and/or the brake control) and the obstacle avoidance control (speed control) to be executed by the vehicle control system 100, but does not involves the steering control. In this automatic speed control mode, although the vehicle 1 is controlled to travel while maintaining the setup vehicle speed, the driver can increase the vehicle speed beyond the setup vehicle speed by depressing the accelerator pedal. Further, when the driver performs brake manipulation, priority is given to the will of the driver, and therefore the vehicle 1 is decelerated from the setup vehicle speed. Further, when the vehicle 1 catches up to a preceding vehicle, the speed control is performed such that the vehicle 1 follows the preceding vehicle while maintaining an inter-vehicle distance appropriate to a follow-up vehicle speed, and then when the preceding vehicle disappears, the speed control is performed such that the follow-up vehicle speed is returned to the setup vehicle speed.

< Speed Limiting Mode >

The speed limiting mode is a mode in which the speed control is performed to prevent the vehicle speed of the vehicle 1 from exceeding a speed limit (legal speed limit) designated by a speed sign or the setup vehicle speed set by the driver, and involves the automatic speed control (engine control) to be executed by the vehicle control system 100. With regard to the legal speed limit, the ECU 10 may be configured to subject image data about an image of a speed sign or a speed marking on a road surface taken by the vehicle-mounted camera 21, to image recognition processing, to identify the legal speed limit, or may be configured to receive information regarding the legal speed limit from outside via a wireless communication. In the speed limiting mode, even when the driver depresses the accelerator pedal so as to increase the vehicle speed beyond the speed limit or the setup vehicle speed, the vehicle speed of the vehicle 1 is increased only up to the speed limit or the setup vehicle speed.

< Basic Control Mode >

The basic control mode is a mode (off mode) in which none of the driving support modes is selected through the driver manipulation unit 35, and the automatic steering control and speed control are not executed by the vehicle control system 100. However, the basic control mode is configured to execute an automatic anti-collision control. In this anti-collision control, when the vehicle 1 encounters a situation where it is likely to collide with a preceding vehicle or the like, the brake control is automatically executed to avoid the collision. It should be noted that the automatic anti-collision control is also executed in the preceding vehicle following mode, the automatic speed control mode, and the speed limiting mode, in the same manner.

Further, the after-mentioned obstacle avoidance control (only the speed control, or the speed control and the steering control) is also executed in the automatic speed control mode, the speed limiting mode and the basic control mode.

Next, with reference to FIGS. 3 to 5, plural traveling courses to be calculated in the vehicle control system 100 according to this embodiment will be described. FIGS. 3 to 5 are explanatory diagrams of first to third traveling courses, respectively. In this embodiment, the ECU 10 is configured to calculate the first to third traveling courses R1 to R3 temporally repeatedly (e.g., at intervals of 0.1 sec). In this embodiment, the ECU 10 is operable, based on information from the sensors and others, to calculate a traveling course in a period from a present time through until a given time period (e.g., 3 sec) elapses. The traveling course Rx (where x = 1, 2, 3) is defined by a target position ($Px\_k$) and a target speed ($Vx\_k$) (where k = 0, 1, 2, - - - , n) of the vehicle 1 on the traveling course. Further, at each target position, target values of plural variables (acceleration, acceleration change rate, yaw rate, steering angle, vehicle angle, etc.) are specified in addition to the target speed.

Each of the traveling courses (first to third traveling courses) in FIGS. 3 to 5 is calculated based on the shape of a traveling road on which the vehicle 1 is traveling, the traveling trajectory of a preceding vehicle, the traveling behavior of the vehicle 1, and the setup vehicle speed, without taking into account obstacle information regarding an obstacle (including a parked vehicle, a pedestrian and the like) on the traveling road or around the traveling road. Thus, in this embodiment, each of the traveling courses is calculated without taking into account the obstacle information, so that it is possible to keep down the overall calculation load for calculating these traveling courses.

For the sake of facilitating understanding, the following description will be made based on an example in which each of the traveling courses is calculated on the assumption that the vehicle 1 travels on a road 5 consisting of a straight section 5a, a curve section 5b, a straight section 5c. The road 5 comprises left and right lanes 5L, 5R. Assume that, at a present time, the vehicle 1 travels on the lane 5L in the straight section 5a.

(First Traveling Course)

As shown in FIG. 3, the first traveling course R1 is set, by a distance corresponding to a given time period, to allow the vehicle 1 to maintain traveling within the lane 5L serving as the traveling road, in conformity to the shape of the road 5. Specifically, the first traveling course R1 is set, in each of the straight sections 5a, 5c, to enable the vehicle 1 to maintain traveling along approximately the widthwise middle of the lane 5L, and set, in the curve section 5b, to enable the vehicle 1 to travel on an inner side or in-side (on the side of a center O of a curvature radius L of the curve section 5b) with respect to the widthwise middle of the lane 5L.

The ECU 10 is operable to execute the image recognition processing for image data about images around the vehicle 1 taken by the vehicle-mounted camera 21, to detect opposing lane edges 6L, 6R. The opposing lane edges are a demarcation line (white road line or the like), and a road shoulder or the like, as mentioned above. Further, the ECU 10 is operable, based on the detected opposing lane edges 6L, 6R, to calculate a lane width W of the lane 5L and the curvature radius L in the curve section 5b. Alternatively, the ECU 10 may be configured to acquire the lane width W and the curvature radius L from the map information of the navigation system 30. Further, the ECU 10 is operable to read, from the image data, a speed limit indicated by a speed sign S or on the road surface. Alternatively, the ECU 10 may be configured to acquire the speed limit from outside via a wireless communication, as mentioned above.

With regard to the straight sections 5a, 5c, the ECU 10 is operable to set a plurality of target positions P1_k of the first traveling course R1 to enable a vehicle width directional center (e.g., the position of the center of gravity) of the vehicle 1 to pass through the widthwise middle between the opposing lane edges 6L, 6R.

On the other hand, with regard to the curve section 5b, the ECU 10 is operable to maximally set a displacement amount Ws toward the in-side from the widthwise middle position of lane 5L at a longitudinal middle position P1_c of the curve interval 5b. This displacement amount Ws is calculated based on the curvature radius L, the lane width W, and a width dimension D of the vehicle 1 (prescribed values stored in the memory of the ECU 10). Then, the ECU 10 is operable to set the plurality of target positions P1_k of the first traveling course R1 in such a manner as to smoothly connect the longitudinal middle position P1_c of the curve section 5b to the widthwise middle position of each of the straight sections 5a, 5b. Here, it should be understood that the first traveling course R1 may also be offset toward the in-side in the straight sections 5a, 5c at positions just before entering the curve section 5b and just after exiting the curve section 5b.

Basically, a target speed V1_k at each of the target positions P1_k of the first traveling course R1 is set to a given setup vehicle speed (constant speed) preliminarily set by the driver through the use of the setting vehicle speed input part 37 of the driver manipulation unit 35 or by the system 100. However, when this setup vehicle speed exceeds the speed limit acquired from a speed sign S or the like, or the speed limit determined according to the curvature radius L of the curve section 5b, the target speed V1_k at each of the target positions P1_k on the traveling course is limited to a lower one of the two speed limits. Further, the ECU 10 is operable to correct the target positions P1_k and the target speeds V1_k, according to a current behavior state (i.e., vehicle speed, acceleration, yaw rate, steering angle, lateral acceleration, etc.) of the vehicle 1. For example, when a current value of the vehicle speed is largely different from the setup vehicle speed, the target speed is corrected so as to enable the vehicle speed to come close to the setup vehicle speed.

(Second Traveling Course)

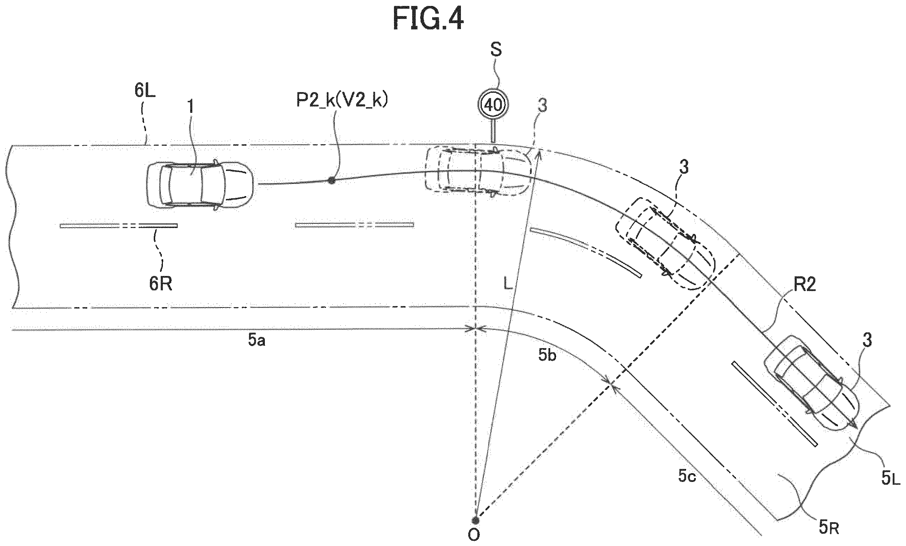

As shown in FIG. 4, the second traveling course R2 is set, by a distance corresponding to a given time period, to enable the vehicle 1 to follow a traveling trajectory of a preceding vehicle 3. The ECU 10 is operable to continuously calculate the position and speed of the preceding vehicle 3 on the lane 5L on which the vehicle 1 is traveling, based on the image data from the vehicle-mounted camera 21, the measurement data from the millimeter-wave radar 22, and the vehicle speed of the vehicle 1 from the vehicle speed sensor 23, and store the calculated position and speed as preceding vehicle trajectory information, and, based on the preceding vehicle trajectory information, to set the traveling trajectory of the preceding vehicle 3 as the second traveling course R2 (target positions P2_k and target speeds V2_k).

(Third Traveling Course)

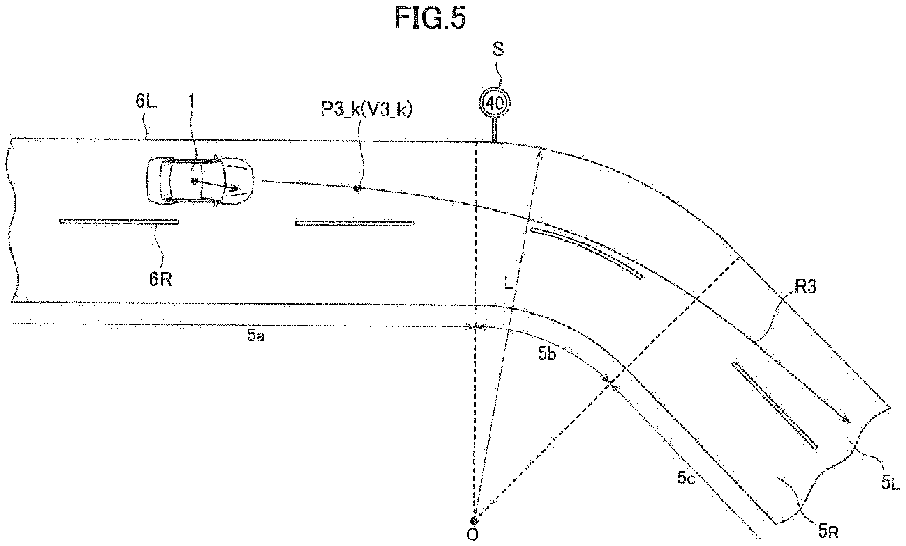

As shown in FIG. 5, the third traveling course R3 is set, by a distance corresponding to a given time period, based on a current driving state of the vehicle 1 by the driver. Specifically, the third traveling course R3 is set based on a position and a speed estimated from a current traveling behavior of the vehicle 1.

The ECU 10 is operable, based on a steering angle, a yaw rate and a lateral acceleration of the vehicle 1, to calculate target positions P3_k of the third traveling course R3 having the distance corresponding to the given time period. However, in the situation where the opposing lane edges are detected, the ECU 10 is operable to correct the target positions P3_k so as to prevent the calculated third traveling course R3 from coming close to or intersecting with any of the lane edges.

Further, the ECU 10 is operable, based on current values of the vehicle speed and the acceleration of the vehicle 1, to calculate a target speed V3_k of the third traveling course R3 having the distance corresponding to the given time period. Here, when the target speed V3_k exceeds the speed limit acquired from the speed sign S or the like, the target speed V3_k may be corrected so as not to exceed the speed limit.

Next, with reference to FIG. 5, a relationship between the driving support modes and the target traveling courses in the vehicle control system 100 will be described. In this embodiment, the ECU 10 is configured to, when the driver manipulates the mode selection switch 36 to select one of the driving support modes, select one of the first to third traveling courses R1 to R3, according to the measurement data from the sensors and others.

When the preceding vehicle following mode is selected in a situation where the opposing lane edges are detected, the first traveling course is applied, irrespective of the presence or absence of a preceding vehicle. In this case, the setup vehicle speed set through the use of the setting vehicle speed input part 37 is used as the target speed.

On the other hand, when the preceding vehicle following mode is selected in a situation where the opposing lane edges are not detected, but a preceding vehicle is detected, the second traveling course is applied. In this case, the target speed is set according to the vehicle speed of the preceding vehicle. Further, when the preceding vehicle following mode is selected in a situation where neither the opposing lane edges nor a preceding vehicle is detected, the third traveling course is applied.

When the automatic speed control mode is selected, the third traveling course is applied. In the automatic speed control mode in which the speed control is automatically executed as mentioned above, the setup speed set through the use of the setting vehicle speed input part 37 is used as the target speed. Further, the driver manually controls vehicle steering by manipulating the steering wheel.

When the speed limiting mode is selected, the third traveling course is also applied. In the speed limiting mode in which the speed control is automatically executed as mentioned above, the target speed is set according to the depression amount of the accelerator pedal by the driver, within the speed limit. Further, the driver manually controls vehicle steering by manipulating the steering wheel.

When the basic control mode (off mode) is selected, the third traveling course is applied. The basic control mode is basically the same as the speed limiting mode in a state in which no speed limit is set.

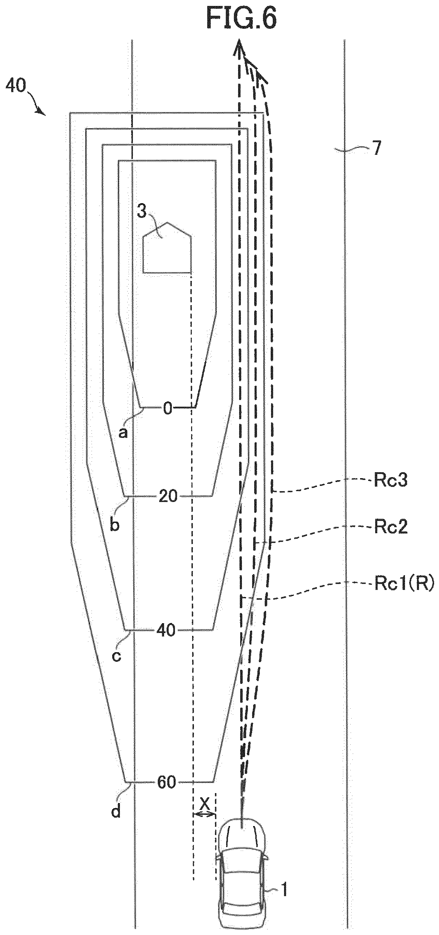

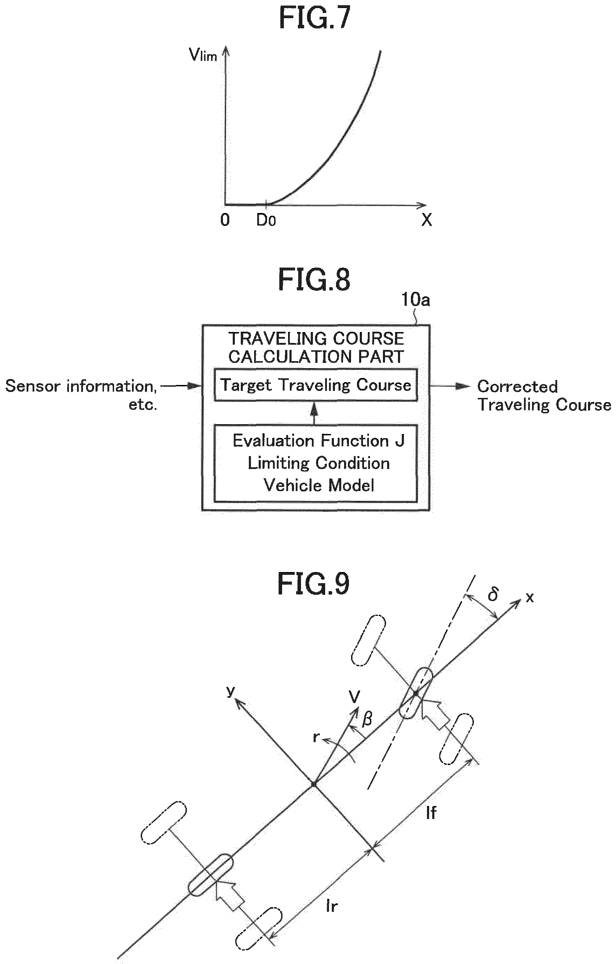

Next, with respect to FIGS. 6 to 9, obstacle avoidance control and associated traveling course correction processing to be executed by the vehicle control system 100 according to this embodiment will be described. FIG. 6 is an explanatory diagram of the obstacle avoidance control, and FIG. 7 is an explanatory diagram showing a relationship between an allowable upper limit of a pass-by speed and a clearance between an obstacle and a vehicle in the obstacle avoidance control. FIG. 8 is an explanatory diagram of the traveling course correction processing, and FIG. 9 is an explanatory diagram of a vehicle model.

In FIG. 6, the vehicle 1 is traveling on a traveling road (lane), and is just about to pass a second vehicle 3 being traveling or parked and to overtake the vehicle 3.

Generally, when passing (or overtaking) an obstacle (e.g., a preceding vehicle, a parked vehicle, or a pedestrian) on or near a road, the driver of the vehicle 1 keeps a given clearance or distance (lateral distance) between the vehicle 1 and the obstacle in a lateral direction orthogonal to a traveling direction of the vehicle 1, and reduces the vehicle speed to a value at which the driver feels safe. Specifically, in order to avoid dangers such as a situation where a preceding vehicle suddenly changes a course, a situation where a pedestrian comes out from a blind spot of an obstacle, and a situation where a door of a parked vehicle is suddenly opened, the relative speed with respect to the obstacle is set to a lower value as the clearance becomes smaller.

Further, generally, when the vehicle 1 is approaching a preceding vehicle from behind the preceding vehicle, the driver of the vehicle 1 adjusts the vehicle speed (relative speed) according to an inter-vehicle distance (longitudinal distance) along the travelling direction. Specifically, when the inter-vehicle distance is relatively large, an approaching speed (relative speed) is maintained relatively high. However, when the inter-vehicle distance becomes relatively small, the approaching speed is set to a lower value. Subsequently, at a given inter-vehicle distance, the relative speed between the two vehicles is set to zero. This action is the same even when the preceding vehicle is a parked vehicle.

As above, the driver drives the vehicle 1 in such a manner as to avoid dangers while taking into account a relationship between the distance (including the lateral distance and the longitudinal distance) between an obstacle and the vehicle 1, and the relative speed therebetween.

Therefore, in this embodiment, as shown in FIG. 6, the vehicle 1 is configured to set a two-dimensional distribution area (speed distribution area 40) defining an allowable upper limit of the relative speed in the travelling direction of the vehicle 1 with respect to an obstacle (such as the parked vehicle 3) detected by the vehicle 1, around the obstacle (over lateral, rear and forward regions around the obstacle) or at least between the obstacle and the vehicle 1. In the speed distribution area 40, the allowable upper limit $V_{lim}$ of the relative speed is set at each point around the obstacle. In this embodiment, in all the driving support modes, the obstacle avoidance control is executed to prevent the relative speed of the vehicle 1 with respect to the obstacle from exceeding the allowable upper limit $V_{lim}$ in the speed distribution area 40.

As can be understood from FIG. 6, in the speed distribution area 40, the allowable upper limit of the relative speed is set such that it becomes smaller as the lateral distance and the longitudinal distance from the obstacle become smaller (as the vehicle 1 approaches the obstacle more closely). In FIG. 6, for the sake of facilitating understanding, four constant relative speed lines each connecting the points having the same allowable upper limits are shown. In this embodiment, the constant relative speed lines a, b, c, d correspond, respectively, to four lines on which the allowable upper limit $V_{lim}$ is 0 km/h, 20 km/h, 40 km/h and 60 km/h. In this embodiment, each of four constant relative speed regions is set to have an approximately rectangular shape.

Here, the speed distribution area 40 does not necessarily have to be set over the entire circumference of the obstacle, but may be set at least in a region behind the obstacle and on one (in FIG. 6, right side) of opposite lateral sides of the obstacle on which the vehicle 1 exists.

As shown in FIG. 7, when the vehicle 1 is traveling at a certain absolute speed, the allowable upper limit $V_{lim}$ set in the lateral direction of the obstacle is kept at 0 (zero) km/h when the clearance X is less than Do (safe distance), and then quadratically increases when the clearance X becomes equal to or greater than $D_0$ ($V_{lim} = k (X - D_0)^2$, where $X \geq D_0$). That is, when the clearance X is less than Do, the relative speed of the vehicle 1 becomes zero so as to ensure safety. On the other hand, when the clearance X is equal to or greater than Do, the vehicle 1 is allowed to pass the obstacle at a larger relative speed as the clearance becomes larger.

In the example illustrated in FIG. 7, the allowable upper limit $V_{lim}$ in the lateral direction of the obstacle is defined as follows: $V_{lim} = f(X) = k (X - D_0)^2$. In this formula, k denotes a gain coefficient related to the degree of change of $V_{lim}$ with respect to X, and is set depending on a type of obstacle or the like. Similarly, Do is set depending on a type of obstacle or the like.

In this embodiment, $V_{lim}$ is defined as a quadratic function of X, as mentioned above. Alternatively, $V_{lim}$ may be defined as another function (e.g., a linear function). Further, the allowable upper limit $V_{lim}$ has been described about a region thereof in the lateral direction of the obstacle with reference to FIG. 7, it can be set in the remaining region in all radial directions of the obstacle including the longitudinal direction, in the same manner. In such a case, the coefficient k and the safe distance Do may be set depending on a direction from the obstacle.

The speed distribution area 40 can be set based on various parameters. Examples of the parameter may include the relative speed between the vehicle 1 and an obstacle, the type of obstacle, the traveling direction of the vehicle 1, a moving direction and a moving speed of the obstacle, the length of the obstacle, and the absolute speed of the vehicle 1. That is, based on these parameters, the coefficient k and the safe distance Do can be selected.

In this embodiment, the obstacle includes a vehicle, a pedestrian, a bicycle, a cliff, a trench, a hole and a fallen object. The vehicle can be classified into a passenger vehicle, a truck, and a motorcycle. The pedestrian can be classified into an adult, a child and a group.

As shown in FIG. 6, when the vehicle 1 is traveling on the traveling road 7, the ECU 10 of the vehicle 1 operates to detect an obstacle (parked vehicle 3) based on the image data from the vehicle-mounted camera 21. At this moment, the type of obstacle (in this example, a vehicle or a pedestrian) is identified.

Further, the ECU 10 operates to calculate the position and the relative speed of the obstacle (parked vehicle 3) with respect to the vehicle 1, and absolute speed of the obstacle, based on the measurement data from the millimeter-wave radar 22 and vehicle speed data from the vehicle speed sensor 23. Here, the position of the obstacle includes an x-directional position (longitudinal distance) along the traveling direction of the vehicle 1, and a y-directional position (lateral distance) along the lateral direction orthogonal to the traveling direction.

The ECU 10 operates to set the speed distribution area 40 with respect to each of one or more detected obstacles (in FIG. 6, the parked vehicle 3). Then, the ECU 10 operates to perform the obstacle avoidance control to prevent the vehicle speed of the vehicle 1 from exceeding the allowable upper limit $V_{lim}$ in the speed distribution area 40. For this purpose, along with the obstacle avoidance control, the ECU 10 operates to correct a target traveling course applied according to the driving support mode selected by the driver.

Specifically, in a situation where, if the vehicle 1 travels along the target traveling course, the target speed exceeds the allowable upper limit defined in the speed distribution area 40, at a certain target position, the target speed is reduced without changing the target position (course Rc1 in FIG. 6), or the target position is changed to a bypass course without changing the target speed so as to prevent the target speed from exceeding the allowable upper limit (course Rc3 in FIG. 6) or both the target position and the target speed are changed (course Rc2 in FIG. 6).

For example, FIG. 6 shows a case where the calculated target traveling course R is a course which is set such that the vehicle 1 travels along a widthwise middle position of the traveling road 7 (target position) at 60 km/h (target speed). In this case, the parked vehicle 3 as the obstacle exists ahead of the vehicle 1. However, in a step of calculating the target traveling course R, this obstacle is not taken into account to reduce the calculation load, as mentioned above.

When the vehicle 1 travels along the target traveling course R, it will cut across the constant relative speed lines d, c, c, d of the speed distribution area 40, in this order. That is, the vehicle 1 being traveling at 60 km/h enters a region inside the constant relative speed line d (allowable upper limit $V_{lim}$ = 60 km/h). Thus, the ECU 10 operates to correct the target traveling course R so as to restrict the target speed at each target position of the target traveling course R to the allowable upper limit $V_{lim}$ or less, thereby forming the corrected target traveling course (corrected traveling course candidate) Rc1. Specifically, in the corrected target traveling course Rc1, as the vehicle 1 approaches the parked vehicle 3, the target speed is reduced to become equal to or less than the allowable upper limit $V_{lim}$ at each target position, i.e., gradually reduced to less than 40 km/h, and then, as the vehicle 1 travels away from the parked vehicle 3, the target speed is gradually increased to 60 km/h as the original speed.

The corrected target traveling course (corrected traveling course candidate) Rc3 is a course which is set such that the vehicle 1 travels outside the constant relative speed line d (which corresponds to a relative speed of 60 km/h), instead of changing the target speed (60 km/h) of the target traveling course R. In this case, the ECU 10 operates to correct the target traveling course R such that the target position is changed to a point on or outside the constant relative speed line d, while maintain the target speed of the target traveling course R, thereby forming the corrected target traveling course Rc3. Thus, the target speed of the corrected target traveling course Rc3 is maintained at 60 km/h as the target speed of the target traveling course R.

The corrected target traveling course (corrected traveling course candidate) Rc2 is a course set by changing both the target position and the target speed of the target traveling course R. In the corrected target traveling course Rc2, instead of maintaining the target speed at 60 km/h, the target speed is gradually reduced as the vehicle 1 approaches the parked vehicle 3, and then gradually increased to 60 km/h as the original speed, as the vehicle 1 travels away rom the parked vehicle 3.

The correction to be achieved by changing only the target speed without changing the target position of the target traveling course R, as in the corrected target traveling course Rc1, can be applied to a driving support mode which involves the speed control but does not involve the steering control (e.g., the automatic speed control mode, the speed limiting mode, and the basic control mode).

Further, the correction to be achieved by changing only the target position without changing the target speed of the target traveling course R, as in the corrected target traveling course Rc3, can be applied to a driving support mode which involves the steering control (e.g., the preceding vehicle following mode).

Further, the correction to be achieved by changing both the target position and the target speed of the target traveling course R, as in the corrected target traveling course Rc2, can be applied to a driving support mode which involves the speed control and the steering control (e.g., the preceding vehicle following mode).

As shown in FIG. 8, the ECU 10 (target traveling course control part 10a) is operable to calculate the target traveling course R, based on the sensor information, etc. Then, upon detection of an obstacle, the ECU 10 is operable to calculate a corrected traveling course R1, R2 or R3 according to the driving support mode, etc., through the traveling course correction processing. In this embodiment, the traveling course correction processing is optimization processing based on an evaluation function J.

The ECU10 stores the evaluation function J, a limiting condition and a vehicle model in the memory. The ECU 10 is operable, in the traveling course correction processing, to derive one corrected traveling course which is the smallest in terms of the evaluation function, while meeting the limiting condition and the vehicle model (optimization processing).

The evaluation function J has a plurality of evaluation factors. In this embodiment, the evaluation factors are functions for evaluation a difference between the target traveling course and each of a plurality of corrected traveling course candidates, in terms of, e.g., speed (longitudinal and lateral speeds), acceleration (longitudinal and lateral accelerations), acceleration change rate (longitudinal and lateral acceleration change rates), yaw rate, lateral offset with respect to the middle of a lane, vehicle angle, steering angle, and other software limitations.

The evaluation factors include evaluation factors regarding a longitudinal behavior of the vehicle 1 (longitudinal evaluation factors: longitudinal speed, longitudinal acceleration, longitudinal acceleration rate, etc.), and evaluation factors regarding a lateral behavior of the vehicle 1 (lateral evaluation factors: lateral speed, lateral acceleration, lateral acceleration rate, yaw rate, lateral offset with respect to the middle of a lane, vehicle angle, steering angle, etc.).

Specifically, the evaluation function J is expressed as the following formula:

$$ J = \sum_{0}^{N} \left\{ W_1 \left( X_1 - X_{ref1} \right)^2 + W_2 \left( X_2 - X_{ref2} \right)^2 + \cdots + W_n \left( X_n - X_{refn} \right)^2 \right\} $$

In this formula, $W_k \left( X_k - X_{refk} \right)^2$ denotes each of the evaluation factors, wherein: $X_k$ denotes a physical value of the corrected traveling course candidate in regard to each of the evaluation factors; $X_{refk}$ denotes a physical value of the target traveling course (before correction) in regard to a corresponding one of the evaluation factors; and $W_k$ denotes a weighting factor for the corresponding one of the evaluation factors (e.g., $0 \leq W_k \leq 1$) (where k is an integer of 1 to n). Thus, in this embodiment, the evaluation function J is equivalent to a value obtained by: calculating differences in respective physical amounts of n evaluation factors between a corrected traveling course candidate and a target traveling course (before correction) calculated on the assumption that there is no obstacle; weighting respective square values of the differences; and summing the weighted values over a traveling course distance corresponding to a given time period N (e.g., N = 3 sec)

The limiting condition includes at least one limiting factor for limiting the behavior of the vehicle 1. The limiting factor is associated directly or indirectly with either one of the evaluation factors. Thus, the behavior (i.e., the physical value of the associated evaluation factor) is limited by the limiting condition, so that it is possible to early converge the optimization processing based on the evaluation function J, thereby shortening a calculation time period. The limiting condition is set differently according to each of the driving support modes.

In this embodiment, examples of the limiting factor include speed (longitudinal and lateral speeds), acceleration (longitudinal and lateral accelerations), acceleration change rate (longitudinal and lateral acceleration change rates), temporal deviation of vehicle speed, lateral offset with respect to the middle of a lane, temporal deviation of inter-vehicle distance, steering angle, steering angular speed, steering torque, steering torque rate, yaw rate, and vehicle angle. With respect to each of the above limiting factors, an allowable numerical rage is set (e.g., $-5 \text{ m/s}^2 \leq$ longitudinal acceleration $\leq 4 \text{ m/s}^2$, $-4 \text{ m/s}^2 \leq$ lateral acceleration $\leq 4 \text{ m/s}^2$). For example, the longitudinal and lateral accelerations exerting a large influence on riding comfort can be limited by the limiting condition. In this case, it is possible to limit maximum values of longitudinal G and lateral G in the corrected traveling course.

The vehicle model is designed to define physical movements of the vehicle 1, and expressed as the following motion equations. In this embodiment, this vehicle model is a two-wheel vehicle model as shown in FIG. 9. The physical motions of the vehicle 1 can be defined by the vehicle model, so that it is possible to derive one corrected traveling course which is less likely to give a driver a feeling of strangeness during traveling, and early converge the optimization processing based on the evaluation function J.

$$mV\left(\frac{d\beta}{dt}+r\right)=-2K_f\left(\beta+\frac{l_f}{V}r-\delta\right)-2K_r\left(\beta-\frac{l_r}{V}r\right) \qquad (1)$$

$$I\frac{dr}{dt}=-2K_f\left(\beta+\frac{l_f}{V}r-\delta\right)l_f+2K_r\left(\beta-\frac{l_r}{V}r\right)l_r \qquad (2)$$

In FIG. 9 and the above equations, m denotes a mass of the vehicle 1; I denotes a yawing inertia moment of the vehicle 1; l denotes a wheelbase of the vehicle 1; If denotes a distance between a center-of-gravity and a front axle of the vehicle 1; $l_r$ denotes a distance between the center-of-gravity and a rear axle of the vehicle 1; $K_f$ denotes a cornering power per front wheel of the vehicle 1; $K_r$ denotes a cornering power per rear wheel of the vehicle 1; V denotes a vehicle speed of the vehicle 1; $\delta$ denotes an actual steering angle of a front wheel of the vehicle 1 ; $\beta$ denotes a lateral slip angle at the center-of-gravity; r denotes a yaw angular speed of the vehicle 1; $\theta$ denotes a yaw angle of the vehicle 1; y denotes a lateral displacement with respect to an absolute space; and t denotes time.

The ECU 10 is operable, based on the target traveling course, the limiting condition, the vehicle model, the obstacle information, etc., to derive one corrected traveling course which is the smallest in terms of the evaluation function J, from among a plurality of corrected traveling course candidates. That is, in the traveling course correction processing, the ECU 10 functions as a solver for outputting a solution of an optimization problem. Thus, the corrected traveling course to be derived as an optimal solution is selected on conditions that it most conforms to (is closest to) the target traveling course before correction, while allowing the vehicle 1 to ensure an appropriate distance and relative speed with respect to an obstacle.

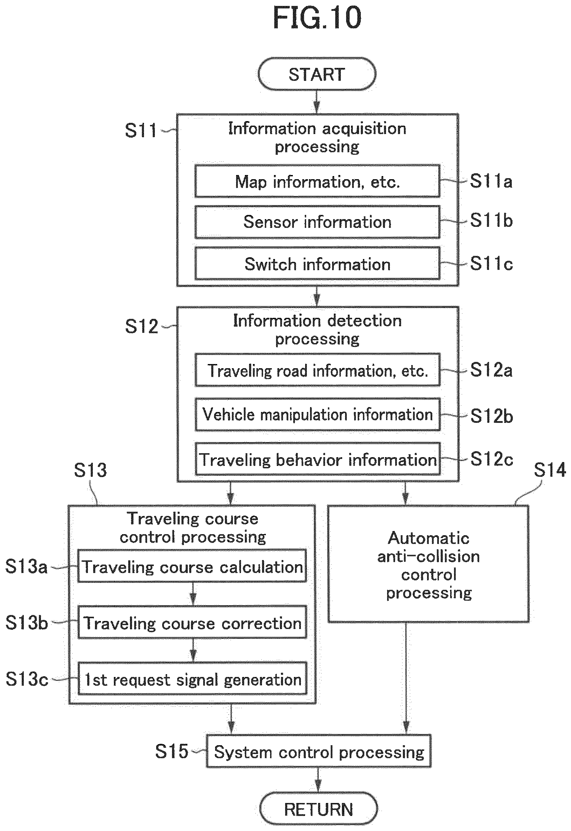

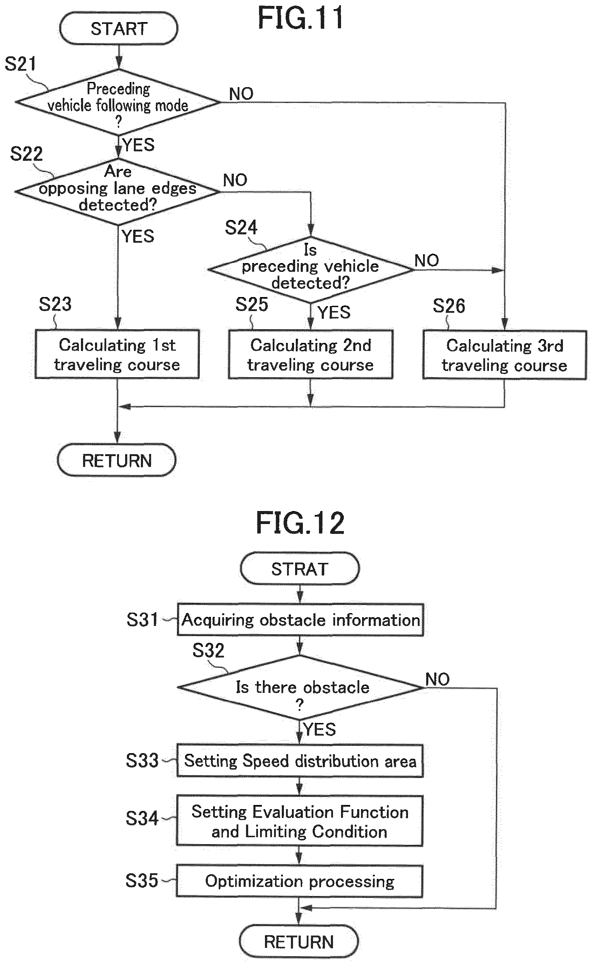

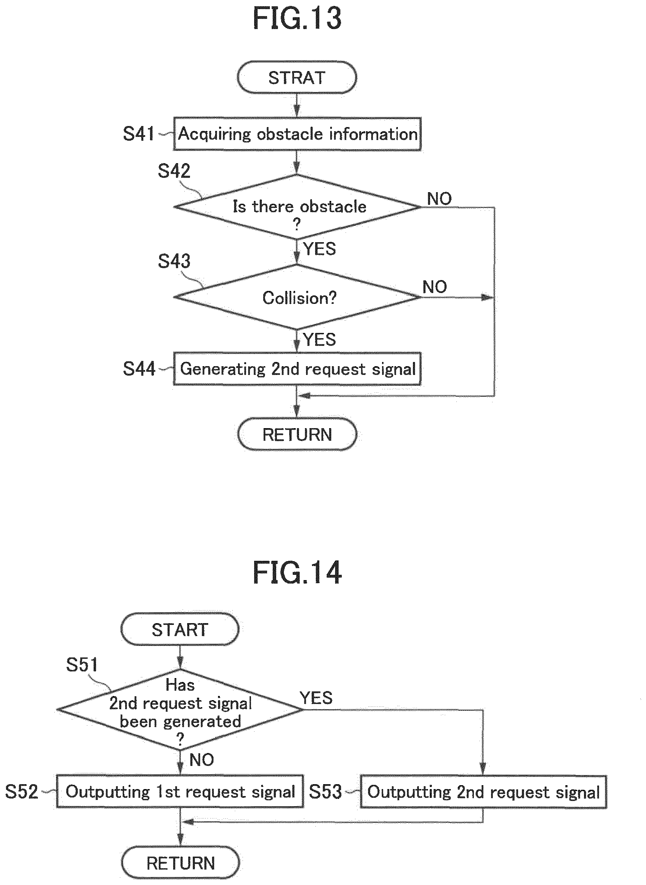

Next, with reference to FIGS. 10 to 14, a processing flow of driving support control in the vehicle control system 100 according to this embodiment will be described. FIG. 10 is the processing flow of the driving support control, and FIG. 11 is a processing flow of traveling course calculation processing. FIG. 12 is a processing flow of the traveling course correction processing, and FIG. 13 is a processing flow of the automatic anti-collision control processing. FIG. 14 is a processing flow of the system control processing.

The ECU 10 operates to repeatedly execute the processing flow in FIG. 10 at intervals of a given time period (e.g., 0.1 seconds). First of all, the ECU 10 (input processing part 10c) operates to execute information acquisition processing (S11). In the information acquisition processing, the ECU 10 operates to: acquire the current vehicle position information and the map information, from the position measurement system 29 and the navigation system 30 (S11a); acquire sensor information from the vehicle-mounted camera 21, the millimeter-wave radar 22, the vehicle speed sensor 23, the acceleration sensor 24, the yaw rate sensor 25, the driver manipulation unit 35 and others (S11b); and acquire switch information from the steering angle sensor 26, the accelerator sensor 27, the brake sensor 28, and others (S11c).

Subsequently, the ECU 10 (input processing part 10c) operates to execute given information detection processing (S12), using a variety of information acquired in the information acquisition processing (S11). In the information detection processing, the ECU 10 operates to detect, from the current vehicle position information, the map information and the sensor information, the traveling road information regarding a shape of a traveling road around and ahead of the vehicle 1 (the presence or absence of a straight section and a curve section, the length of each of the sections, the curvature radius of the curve section, a lane width, opposing lane edges, the number of lanes, the presence or absence of an intersection, a speed limit determined by the curvature of a curve, etc.), traveling regulation information (legal speed limit, red light, etc.), and the preceding vehicle trajectory information (the position and the vehicle speed of a preceding vehicle) (S12a).

Further, the ECU 10 operates to: detect, from the switch information, vehicle manipulation information regarding vehicle manipulation by the driver (steering angle, accelerator pedal depression amount, brake pedal depression amount, etc.) (S12b); and detect, from the switch information and the sensor information, traveling behavior information regarding the behavior of the vehicle 1 (vehicle speed, longitudinal acceleration, lateral acceleration, yaw rate, etc.) (S12c).

Subsequently, the ECU 10 (traveling course control part 10a) operates to execute traveling course control processing, based on information obtained by calculation (S13). The traveling course control processing includes traveling course calculation processing (S13a), traveling course correction processing (S13b), and a first request signal generation part (S13c).

In the traveling course calculation processing (S13a), the first traveling course, the second traveling course and the third traveling course are calculated as mentioned above.

In the traveling course correction processing (S13b), the ECU 10 operates to correct the target traveling course, based on the obstacle information (e.g., information about the parked vehicle 3 illustrated in FIG. 6). In the traveling course correction processing, basically, the target traveling course is corrected to allow the vehicle 1 to avoid the obstacle by the speed control and/or steering control according to the selected driving support mode.

In the first request signal generation processing (S13c), the ECU 10 operates to generate, according to the selected driving support mode, a request signal to be output to a concerned control sub-system (the engine control system 31, the brake control system 32 and/or the steering control system 33) so as to allow the vehicle 1 to travel on the finally calculated traveling course. Specifically, the ECU 10 operates to generate a first request signal (an engine request signal, a brake request signal, and/or a steering request signal), according to target control amounts of the engine, the braking device and the steering device, determined by the calculated traveling course (corrected traveling course).

Further, along with the traveling course control processing (S13), the ECU 10 (automatic anti-collision control part 10b) operates to execute automatic anti-collision control processing to generate a second request signal (brake request signal).

Further, the ECU 10 (output control part 10d) operates to output, based on the generated first and second request signals, a request signal to the engine control system 31, the brake control system 32 and/or the steering control system 33 (system control processing: S15).

Next, with reference to FIG. 11, a detailed processing flow of the traveling course calculation processing (S13a) in FIG. 10 will be described.

First of all, the ECU 10 operates to determine, based on the driving support mode selection signal received from the mode selection switch 36, whether or not the driver selects the preceding vehicle following mode (S21).

When the preceding vehicle following mode is determined to be selected (S21: YES), the ECU 10 operates to determine, based on the sensor information, etc., whether or not opposing lane edges are detected (S22). When opposing lane edges are determined to be detected (S22: YES), the ECU 10 operates to calculate the first traveling course as the target traveling course. Here, when a preceding vehicle is detected, the vehicle speed of the preceding vehicle is used as the target speed. On the other hand, when no preceding vehicle is detected, the setup speed is used as the target speed.

In the above first traveling course calculation process, the ECU 10 operates to calculate the traveling course R1 having a distance corresponding to a given time period (e.g., 3 seconds), based on the setup vehicle speed, the opposing lane edges, the lane width, the speed limit, the vehicle speed, the longitudinal acceleration, the yaw rate, the steering angle, the lateral acceleration, etc. The target positions of the traveling course R1 are set to allow the vehicle 1 to travel along approximately the middle of a lane in a straight section, and travel on the in-side of a curve in a curve section to have a larger turning radius. Further, the target speeds of the traveling course R1 is set such that a lowest one of the setup vehicle speed, a speed limit designated by a traffic sign, and a speed limit determined by the curvature of the curve becomes a maximum speed thereof.

On the other hand, in the S22, when no the opposing lane edges are determined to be detected (S22: NO), the ECU 10 operates to determine whether or not a preceding vehicle is detected (S24).

When no opposing lane edges are determined to be detected, but a preceding vehicle is determined to be detected (S24: YES), the ECU 10 operates to calculate the second traveling course as the target traveling course (S25). In the above second traveling course calculation process, the ECU operates to calculate the traveling course R2 having a distance corresponding to the given time period, based on the preceding vehicle trajectory information (position and speed) acquired from the sensor information, etc., to allow the vehicle 1 to follow the behavior (position and speed) of the preceding vehicle, while maintaining a given inter-vehicle distance between the preceding vehicle and the vehicle 1, i.e., behind the preceding vehicle by a time period necessary to travel over the inter-vehicle distance.

On the other hand, when the preceding vehicle following mode is determined not to be selected (S21: NO), or when the preceding vehicle following mode is determined to be selected, but none of the opposing lane edges and the preceding vehicle are determined to be detected (S24: NO), the ECU 10 operates to calculate the third traveling course as the target traveling course (S26). In the above third traveling course calculation process, the ECU operates to calculate, based on the vehicle manipulation information, the traveling behavior information, etc., the traveling course R3 having a distance corresponding to the given time period, assumed from the current behavior of the vehicle 1.

Next, with reference to FIG. 12, a detailed processing flow of the traveling course correction processing (S13b) in FIG. 10 will be described.

First of all, the ECU 10 operates to acquire obstacle information (the presence or absence, the position, the speed, etc., of a preceding vehicle or an obstacle), using a variety of information acquired in the information acquisition processing (S11) (S31).

Subsequently, the ECU 10 operates to determine whether or not an obstacle is detected (S32). When no obstacle is determined to be detected (S32: NO), the processing routine is completed. On the other hand, when an obstacle is determined to be detected (S32: YES), the ECU 10 operates to set the speed distribution area (see FIG. 6) based on the obstacle information, the traveling behavior information of the vehicle 1, etc. (S33).

Subsequently, the ECU 10 operates to read the evaluation function J, the limiting condition and the vehicle model, according to the sensor/switch information (e.g., the driving support mode selection signal) (S34). Subsequently, the ECU 10 operates to execute the optimization processing for the corrected traveling course, using the evaluation function J, based on the target traveling course calculated by the traveling course calculation processing (S13), the speed distribution area (S33), the evaluation function J, the limiting condition, the vehicle model, the sensor/switch information, etc. (S35). In this optimization processing, an evaluation value of the evaluation function J with respect to each of a plurality of corrected traveling course candidates is repeatedly calculated until an optimized corrected traveling course is derived. Then, one of the corrected traveling course candidates which is the smallest in terms of the evaluation value is output as the corrected traveling course.

Next, with reference to FIG. 13, a detailed processing flow of the automatic anti-collision control processing (S14) in FIG. 10 will be described.

First of all, the ECU 10 operates to acquire obstacle information (the presence or absence, the position, the speed, etc., of a preceding vehicle or an obstacle), using a variety of information acquired in the information acquisition processing (S11) (S41).

Subsequently, the ECU 10 operates to calculate a predicted traveling course of the vehicle 1 having a distance corresponding to a given time period (e.g., 3 seconds), predicted from a current behavior state (i.e., vehicle speed, acceleration, yaw rate, steering angle, lateral acceleration, etc.) of the vehicle 1, and determine whether or not there is an obstacle on the predicted traveling course (S42).

When no obstacle is determined to be on the predicted traveling course (S42: NO), the ECU 10 operates to terminate the processing. On the other hand, when an obstacle is determined to be detected (S32: YES), the ECU 10 operates to determine whether or not there is a possibility of collision with the obstacle (S43). In this collision determination processing (S43), it is determined whether or not a time-to-collision (TTC = distance/relative speed) which is a time period before the vehicle 1 collides with the obstacle is within a given brake activation time period Tth (e.g., 1 second).

When TCC is determined to be greater than Tth, the ECU 10 operates to determine that there is no possibility of collision (S43: NO), and terminate the processing. On the other hand, TCC is determined to be equal to less than Tth, the ECU 10 operates to determine that there is a possibility of collision (S43: YES).

When there is a possibility of collision (S43: YES), the ECU 10 operates to generate the second signal (S44), and then terminate the processing. The second signal is a brake request signal set for the braking system 32 to generate a given large braking force enough to rapidly decelerate the vehicle 1 so as to avoid collision with the obstacle.

Here, the second request signal is generated only when there is a possibility of collision with the obstacle. That is, the second request signal is not always generated every cycle period (e.g., 0.1 seconds) of the driving support control in FIG. 10, but generated only in an emergency situation where there is a possibility of collision. Alternatively, the ECU 10 may be configured to, when there is no obstacle on the predicted traveling course or when there is no possibility of collision, generate a pseudo-second signal (Null signal) containing a Null value.

Next, with reference to FIG. 14, a detailed processing flow of the system control processing (S15) in FIG. 10 will be described.

Firstly, among request signals to be output from the ECU 10 to the outside control systems, the brake request signal relating to brake control will be described.

In advance of outputting a request signal to the outside, the ECU 10 operates to determine whether or not the second request signal (brake request signal) is generated by the automatic anti-collision control processing (S14) (S51). When no substantial second request signal (non-Null signal) is determined to be generated (S51: NO), it is not in an emergency situation. Thus, the ECU 10 operates to output the first request signal generated by the traveling course control processing (S13) (S52), and then terminate the processing.

On the other hand, when the second request signal is determined to be generated (S51: YES), it is in an emergency situation. Thus, the ECU 10 operates to output the second request signal (brake request signal) (S53), and then terminate the processing.

With regard to the engine request signal and the steering request signal, the ECU 10 is configured to output the engine request signal and/or the steering request signal included in the first request signal, to the outside (the engine control system 31 and/or the steering control system 33), irrespective of the presence or absence of the second request signal.

For example, in a situation where the automatic speed/steering control is executed in the preceding vehicle following mode, as long as the traveling course control processing (S13) is adequately executed, the corrected traveling course is calculated by the traveling course correction processing (S13b), so as to safely avoid an obstacle. Thus, the second request signal is never generated by the automatic anti-collision control processing (S14). Thus, the second request signal is generated only when the traveling course control processing (S13) is not fully completed within a given calculation time period (time-out) due to, e.g., the occurrence of a high calculation load. Therefore, in this case (S51: YES), the brake request signal is based on the second request signal. On the other hand, the first request signal is likely to be not updated to an optimal value or to be not generated (Null value). Thus, each of the engine request signal and the steering request signal may be set to a predetermined value.

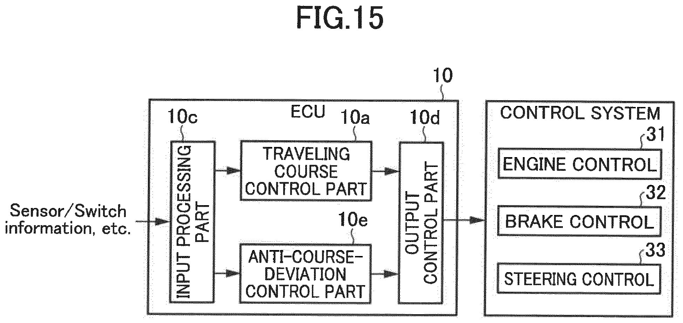

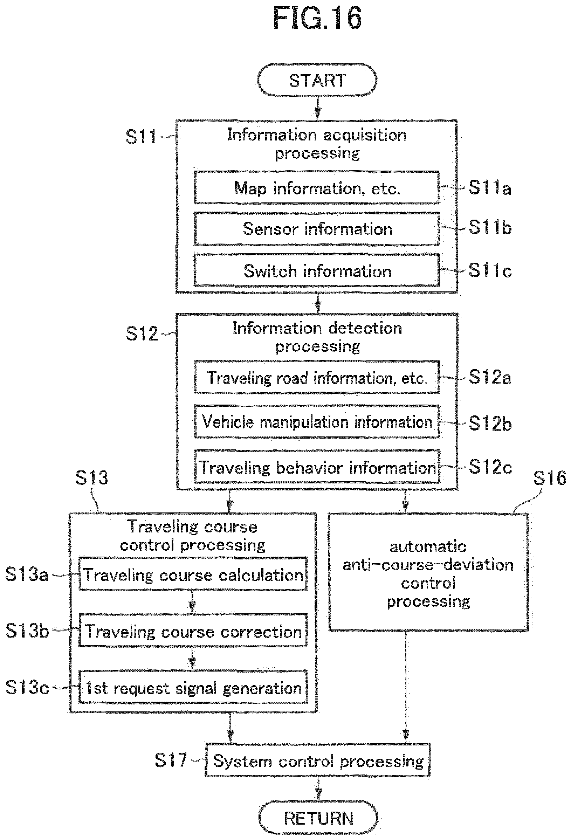

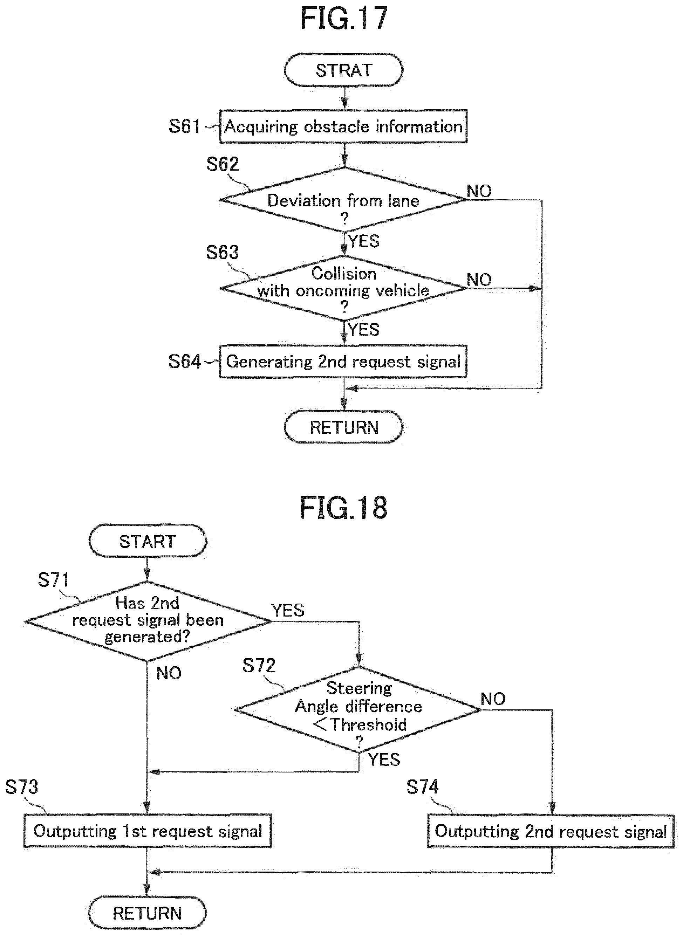

Next, with reference to FIGS. 15 to 18, a vehicle control system according to a second embodiment of the present invention will be described. FIG. 15 is a control block diagram of the vehicle control system, and FIG. 16 is a processing flow of driving support control. FIG. 17 is a processing flow of automatic anti-course-deviation control processing, and FIG. 18 is a processing flow of system control processing.

In the second embodiment, as the emergency avoidance control, automatic anti-course-deviation control is executed, instead of the automatic anti-collision control. Thus, the second embodiment will be described mainly about a difference from the first embodiment.

As shown in FIG. 15, the ECU 10 comprises one or more CPUs which function as a traveling course control part 10a, an anti-course-deviation control part 10e, an input processing part 10c, and an output control part 10d. In the second embodiment, the ECU 10 is configured such that the automatic anti-course-deviation control for use in an emergency situation is executed, independently of normal traveling course control.

The anti-course-deviation control part 10e is operable to generate a second signal for the steering control system 33 to operate emergency automatic steering so as to avoid, based in input information, collision with an oncoming vehicle or the like caused by deviation from a lane.

In the processing illustrated in FIG. 16, steps S11 to S13 are the same as those in the first embodiment. In step S16, along with the traveling course control processing (S13), the ECU 10 (anti-course-deviation control part 10e) operates to execute automatic anti-course-deviation control processing (S16). Further, the ECU 10 (output control part 10d) operates to execute the system control processing (S17).

As shown in FIG. 17, in the automatic anti-course-deviation control processing, the ECU 10 operates to acquire obstacle information (the presence or absence, the position, the speed, etc., of a preceding vehicle or an obstacle), using a variety of information acquired in the information acquisition processing (S11) (S61).

Subsequently, the ECU 10 operates to calculate a predicted traveling course of the vehicle 1 having a distance corresponding to a given time period (e.g., 3 seconds), predicted from a current behavior state (i.e., vehicle speed, acceleration, yaw rate, steering angle, lateral acceleration, etc.) of the vehicle 1, and determine whether or not the predicted traveling course deviates from a traveling lane (whether or not the predicted traveling course comes across a lane edge) (S62).

When the predicted traveling course is determined not to deviate from the lane (S62: NO), the ECU 10 operates to terminate the processing. On the other hand, when the predicted traveling course is determined to deviate from the lane (S62: YES), the ECU 10 operates to determine about a possibility of collision with an oncoming vehicle being traveling in an opposite lane (S63). In this collision determination processing (S63), it is determined, based on the information acquired in the step S61, whether or not there is an oncoming vehicle in the opposite lane within a given distance from the vehicle 1.

When no oncoming vehicle is determined to be within the given distance, the ECU 10 operates to determine that there is no possibility of collision (S63: NO), and terminate the processing (no need for emergency steering). On the other hand, when an oncoming vehicle is determined to be within the given distance, the ECU 10 operates to determine that there is a possibility of collision (S63: YES). Further, when, in the step 61, an obstacle such as an edge stone or a guardrail is detected at a lane edge, the ECU 10 also operates to determine that there is a possibility of collision (S63: YES).

When there is a possibility of collision (S63: YES), the ECU 10 operates to generate the second request signal (S64), and terminate the processing. In the second embodiment, the second request signal is a steering request signal for the steering control system 33 to automatically steer the vehicle by a given steering angle so as to avoid deviation from the lane. As above, the second request signal is generated only when there is a possibility of collision with an oncoming vehicle due to deviation from a traveling lane.

As shown in FIG. 18, in the system control processing (S17), the ECU 10 operates to determine whether or not the second request signal (steering request signal) is generated by the automatic anti-course-deviation control processing (S16) during output of a request signal to the output (S71). When no second request signal is determined to be generated (S71: NO), it is not in an emergency situation. Thus, the ECU 10 operates to output the first request signal generated by the traveling course control processing (S13) (S73), and then terminate the processing.

On the other hand, when the second request signal is determined to be generated (S71: YES), the ECU 10 operates to determine whether a difference in target control amount (target steering angle) between respective steering request signals in the first request signal and the second request signal is less than a given threshold (S72). When the difference is determined to be less than the given threshold (S72: YES), the ECU 10 operates to output the first request signal to the outside (S72), and then terminate the processing.

On the other hand, when the difference is determined to be equal to or greater than the given threshold (S72:

NO), the ECU 10 operates to output the second request signal (steering request signal) to the outside (steering control system 33) (S74), and then terminate the processing.

With regard to the engine request signal and the brake request signal, the ECU 10 is configured to output the engine request signal and/or the brake request signal included in the first request signal, to the outside (the engine control system 31 and/or the brake control system 32), irrespective of the presence or absence of the second request signal.

For example, in a situation where the automatic speed/steering control is executed in the preceding vehicle following mode, as long as the traveling course control processing (S13) is adequately executed, no deviation from a lane occurs. However, even in such a situation, the second request signal can be generated by the automatic anti-course-deviation control processing (S16). Thus, in the second embodiment, when there is not a large difference in target steering angle between respective steering request signals in the first request signal and the second request signal, the vehicle control is performed according to the first request signal.

However, the second request signal is also generated when the traveling course control processing (S13) is not fully completed within a given calculation time period (time-out) due to, e.g., the occurrence of a high calculation load. In this situation (S71: YES), when there is a large difference in target steering angle between respective steering request signals in the first request signal and the second request signal (S72: NO), as the steering request signal, the second request signal is employed. On the other hand, the first request signal is likely to be not updated to an optimal value or to be not generated (Null value). Thus, each of the engine request signal and the brake request signal may be set to a predetermined value.

In each of the first and second embodiments, along with the traveling course control processing, the ECU 10 operates to execute a respective one of the automatic anti-collision control processing and the automatic anti-course-deviation control processing, as the emergency avoidance control processing. Each of the automatic anti-collision control processing and the automatic anti-course-deviation control processing is control processing for avoiding an obstacle by operating a respective one of the brake control system 32 and the steering control system 33. However, the emergency avoidance control processing may be another control processing, such as control processing in which one or more of the engine control system 31, the brake control system 32 and the steering control system 33 are operated in an emergency situation.

Next, functions of the vehicle control derive for use in the above embodiments will be described.

The vehicle control device (ECU) 10 for use in the above embodiments comprises: a traveling course control part 10a to iteratively update a target traveling course R of a vehicle 1; and an emergency avoidance control part (automatic anti-collision control part 10b, anti-course-deviation control part 10e) to execute automatic emergency avoidance control processing (S14; S41 to S44, S16; S61 to S64) for automatically operating a given control system including at least one of an engine control system 31, a brake control system 32 and a steering control system 33 of the vehicle 1 to avoid collision with an obstacle. The traveling course control part 10a is configured to, upon detection of the obstacle (e.g., second vehicle 3), execute traveling course correction processing (S13b; S31 to S35) of correcting the target traveling course R so as to avoid the obstacle. The traveling course control part 10a is operable, in the traveling course correction processing, to correct the target traveling course R to calculate a plurality of corrected traveling course candidates for avoiding the obstacle, and evaluate the corrected traveling course candidates with respect to the target traveling course R by a given evaluation function J to select, as a corrected traveling course, one of the corrected traveling course candidates according to the evaluation. The traveling course control part 10a is configured to generate a first request signal for the given control system to allow the vehicle 1 to travel along the corrected traveling course. The emergency avoidance control part (10b, 10e) is configured to execute the automatic emergency avoidance control processing, independently of the traveling course control part 10a, to generate a second request signal for the given control system. The ECU 10 further comprises an output control part 10d to receive each of the first request signal and the second request signal from a corresponding one of the traveling course control part 10a and the automatic emergency avoidance control part (10b, 10e). The output control part 10d is configured to output the first request signal or the second request signal to the given control system.

In the ECU 10 for used in the above embodiments, upon detection of the obstacle, the traveling course control part 10a operates to derive a corrected traveling course, and generate the first request signal for controlling the engine control system 31, the brake control system 32 and/or the steering control system 33, based on the corrected traveling course. However, due to the processing of calculating an optimal corrected traveling course for obstacle avoidance, using the evaluation function J, in addition to the processing of calculating the target traveling course, a calculation load can be excessively high in some traveling conditions, and there is a possibility of failing to deriving an optimal corrected traveling course within a calculation cycle period (updating cycle period) (time-out). In this case, there is a possibility of failing to avoid an obstacle in a better manner.

Therefore, in the above embodiments, the ECU 10 comprises the automatic emergency avoidance control part (10b, 10d) for avoiding collision with the obstacle, in addition to the traveling course control part 10a. The traveling course control part 10a is configured to execute high-load calculation processing such as traveling course calculation and corrected traveling course calculation. On the other hand, the automatic emergency avoidance control part (10b, 10e) may be configured to execute low-load calculation processing (i.e., calculation processing for engine, brake and/or steering controls for avoidance of collision with an obstacle). Thus, the automatic emergency avoidance control part (10b, 10e) can reliably complete the calculation processing within at least the updating cycle period.

Thus, in the ECU 10 for use in the above embodiments, even in a situation where the traveling course control part 10a is incapable of deriving an optimal traveling course, obstacle avoidance can be reliably realized by the automatic emergency avoidance control part (10b, 10e). This makes it possible to improve traveling safety of the vehicle 1.

In the ECU 10 for use in the above embodiments, the output control part 10d is configured to output the second request signal in priority to the first request signal. Thus, when receiving the two request signals (the first request signal and the second request signal), the output control part 10d allows the brake control system to be operated according to the second request signal having higher reliability in terms of obstacle avoidance.

In the ECU 10 for use in the above embodiments, the automatic emergency avoidance control processing is automatic anti-course-deviation control processing for operating the steering control system 33 to avoid collision with an obstacle. Further, the emergency avoidance control part is configured to be inhibited from generating the second request signal as long as a possibility of collision with the obstacle is low, even when, in the automatic anti-course-deviation control processing, the vehicle is determined to deviate from a driveling lane.

In the ECU 10 for use in the above embodiments, the traveling course correction processing and the automatic emergency avoidance control processing are executed within a given calculation cycle period by a single CPU. Thus, although both the traveling course correction processing and the automatic emergency avoidance control processing are executed by a single CPU, it is possible to reliably avoid collision with an obstacle.

LIST OF REFERENCE SIGNS

1: vehicle
3: vehicle
5: road
5a, 5c: straight section
5b: curve section
$5_L$, $5_R$: lane
$6_L$. $6_R$: lane edge
7: traveling road
40: speed distribution area
a, b, c, d: constant relative speed line
$V_{lim}$: allowable upper limit
100: vehicle control system
D: width dimension
Do: safe distance
R: target traveling course
R1: first traveling course
R2: second traveling course
R3: third traveling course
Rc1, Rc2, Rc3: corrected traveling course (corrected traveling course candidate)
X: clearance

**Claims**

1. A vehicle control device comprising:

a traveling course control part to iteratively update a target traveling course of a vehicle; and
an automatic emergency avoidance control part to execute automatic emergency avoidance control processing for automatically operating a given control system including at least one of an engine control system, a brake control system and a steering control system of the vehicle to avoid collision with an obstacle,
wherein the traveling course control part is configured to, upon detection of the obstacle, execute traveling course correction processing of correcting the target traveling course so as to avoid the obstacle,
wherein the traveling course control part is configured to, in the traveling course correction processing, correct the target traveling course to calculate a plurality of corrected traveling course candidates for avoiding the obstacle, and evaluate the corrected traveling course candidates with respect to the target traveling course by a given evaluation function to select one of the corrected traveling course candidates as a corrected traveling course according to the evaluation, and

wherein the traveling course control part is configured to generate a first request signal for the given control system to allow the vehicle to travel along the corrected traveling course; and

the automatic emergency avoidance control part is configured to execute the automatic emergency avoidance control processing, independently of the traveling course control part, to generate a second request signal for the given control system, and

wherein the vehicle control device further comprises an output control part to receive each of the first request signal and the second request signal from a corresponding one of the traveling course control part and the automatic emergency avoidance control part, wherein the output control part is configured to output the first request signal or the second request signal to the given control system.

2. The vehicle control device as recited in claim 1, wherein the output control part is configured to output the second request signal in priority to the first request signal.

3. The vehicle control device as recited in claim 1 or 2, wherein the automatic emergency avoidance control processing is automatic anti-course-deviation control processing for operating the steering control system to avoid collision with an obstacle.

4. The vehicle control device as recited in claim 3, wherein, in the automatic anti-course-deviation control processing, the second request signal is not generated if the possibility of collision with the obstacle is low, even when the vehicle is determined to deviate from a driveling lane.

5. The vehicle control device as recited in any one of claims 1 to 4, wherein the traveling course correction processing and the automatic emergency avoidance control processing are executed within a given calculation cycle period by a single CPU.

# FIG.1

100

21 — CAMERA

22 — RADAR

23 — VEHICLE SPEED SENSOR

24 — ACCELERATION SENSOR

25 — YAW RATE SENSOR

26 — STEERING ANGLE SENSOR

27 — ACCELERATOR SENSOR

28 — BRAKE SENSOR

29 — POSITION MEASUREMENT SYSTEM

30 — NAVIGATION SYSTEM

10

ECU

ENGINE CONTROL — 31

BRAKE CONTROL — 32

STEERING CONTROL — 33

DRIVER MANIPULATION UNIT — 35

MODE SELECTION SWITCH — 36

SETTING VEHICLE SPEED INPUT PART — 37

# FIG.2

10

ECU

10c

INPUT PROCESSING PART

Sensor/Switch information, etc.

10a

TRAVELING COURSE CONTROL PART

10b

AUTOMATIC ANTI-COLLISION CONTROL PART

10d

OUTPUT CONTROL PART

CONTROL SYSTEM

31

ENGINE CONTROL

32

BRAKE CONTROL

33

STEERING CONTROL

# FIG.3

EP 3 663 153 A1

FIG.4

FIG.5

# FIG.6

# FIG.7

# FIG.8

# FIG.9

# FIG.10

```
                    ( START )
                        ↓
S11 ─┌─────────────────────────────────┐
     │   Information acquisition        │
     │         processing               │
     │  ┌──────────────────────────┐    │
     │  │   Map information, etc.   │────┼─ S11a
     │  └──────────────────────────┘    │
     │  ┌──────────────────────────┐    │
     │  │    Sensor information     │────┼─ S11b
     │  └──────────────────────────┘    │
     │  ┌──────────────────────────┐    │
     │  │    Switch information     │────┼─ S11c
     │  └──────────────────────────┘    │
     └─────────────────────────────────┘
                        ↓
S12 ─┌─────────────────────────────────┐
     │   Information detection          │
     │         processing               │
     │  ┌──────────────────────────────┐│
     │  │ Traveling road information, etc.│─ S12a
     │  └──────────────────────────────┘│
     │  ┌──────────────────────────────┐│
     │  │ Vehicle manipulation information│─ S12b
     │  └──────────────────────────────┘│
     │  ┌──────────────────────────────┐│
     │  │ Traveling behavior information │─ S12c
     │  └──────────────────────────────┘│
     └─────────────────────────────────┘
```

S13

```
┌──────────────────────────────┐      S14
│   Traveling course            │   ┌──────────────┐
│   control processing          │   │  Automatic   │
│ ┌──────────────────────────┐  │   │ anti-collision│
│ │Traveling course calculation│ │   │   control    │
│ └──────────────────────────┘  │   │  processing  │
│ ┌──────────────────────────┐  │   └──────────────┘
│ │Traveling course correction│ │
│ └──────────────────────────┘  │
│ ┌──────────────────────────┐  │
│ │1st request signal generation│ │
│ └──────────────────────────┘  │
└──────────────────────────────┘
```

S13a — Traveling course calculation

S13b — Traveling course correction

S13c — 1st request signal generation

```
          ↓                    ↓
S15 ─┌────────────────────────────────┐
     │   System control processing    │
     └────────────────────────────────┘
                   ↓
              ( RETURN )
```

# FIG.11

START

S21

Preceding vehicle following mode ? —NO→

↓YES

S22

Are opposing lane edges detected? —NO→

↓YES

S24

Is preceding vehicle detected? —NO→

↓YES

S23 | S25 | S26

| Calculating 1st traveling course | Calculating 2nd traveling course | Calculating 3rd traveling course |

RETURN

# FIG.12

STRAT

S31 — Acquiring obstacle information

S32

Is there obstacle ? —NO→

↓YES

S33 — Setting Speed distribution area

S34 — Setting Evaluation Function and Limiting Condition

S35 — Optimization processing

RETURN

# FIG.13

START

S41 — Acquiring obstacle information

S42

Is there obstacle ? ——NO——→

↓YES

S43

Collision? ——NO——→

↓YES

S44 — Generating 2nd request signal

RETURN

# FIG.14

START

S51

Has 2nd request signal been generated ? ——YES——→

↓NO

S52 — Outputting 1st request signal    S53 — Outputting 2nd request signal

RETURN

# FIG.15

# FIG.16

START

S11 — Information acquisition processing

Map information, etc. — S11a

Sensor information — S11b

Switch information — S11c

S12 — Information detection processing

Traveling road information, etc. — S12a

Vehicle manipulation information — S12b

Traveling behavior information — S12c

S13

Traveling course control processing

S13a — Traveling course calculation

S13b — Traveling course correction

S13c — 1st request signal generation

S16

automatic anti-course-deviation control processing

S17 — System control processing

RETURN

## FIG.17

```
        ┌─────────────┐
        │    STRAT    │
        └─────────────┘
               │
S61 ─┤ Acquiring obstacle information │
               │
S62            ▼
        ╱ Deviation from lane ╲────── NO ──────┐
        ╲        ?          ╱                   │
               │ YES                            │
S63            ▼                                │
        ╱      Collision      ╲                 │
        ╲ with oncoming vehicle ╱── NO ──────▶  │
        ╲         ?          ╱                  │
               │ YES                            │
S64 ─┤ Generating 2nd request signal │          │
               │                                │
               ▼◀───────────────────────────────┘
        ┌─────────────┐
        │   RETURN    │
        └─────────────┘
```

## FIG.18

```
        ┌─────────────┐
        │    START    │
        └─────────────┘
               │
S71            ▼
        ╱   Has 2nd     ╲
        ╲ request signal been ╱── YES ──┐
        ╲  generated?   ╱                │
               │ NO             S72      ▼
               │              ╱  Steering   ╲
               │              ╲ Angle difference ╱── NO ──┐
               │              ╲  < Threshold  ╱            │
               │              ╲      ?     ╱               │
               │                  │ YES                    │
               │◀─────────────────┘                        │
S73            ▼                              S74          ▼
┌──────────────────────────┐      ┌──────────────────────────┐
│ Outputting 1st request signal │  │ Outputting 2nd request signal │
└──────────────────────────┘      └──────────────────────────┘
               │                              │
               ▼◀─────────────────────────────┘
        ┌─────────────┐
        │   RETURN    │
        └─────────────┘
```

## INTERNATIONAL SEARCH REPORT

| | International application No. |
|---|---|
| | PCT/JP2018/031103 |

A. CLASSIFICATION OF SUBJECT MATTER
Int.Cl. B60W30/095(2012.01)i, B60W30/09(2012.01)i, B60W50/00(2006.01)i,
B62D6/00(2006.01)i, G08G1/16(2006.01)i

According to International Patent Classification (IPC) or to both national classification and IPC

B. FIELDS SEARCHED

Minimum documentation searched (classification system followed by classification symbols)
Int.Cl. B60W30/00-50/16, B62D6/00, G08G1/16

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-192010 A (HITACHI, LTD.) 10 November 2016, paragraphs [0012], [0013], [0018], [0020], [0028], [0029], [0033], fig. 1-5, 8<br>& WO 2016/158260 A1 | 1, 5<br>2-4 |
| Y | WO 2012/172632 A1 (TOYOTA MOTOR CORPORATION) 20 December 2012, abstract, paragraphs [0031]-[0042], fig. 1-4<br>& US 8949018 B2, abstract, specification column 7, line 40 to column 10, line 57, fig. 1-4 & EP 2728563 A1 & CN 103597527 A | 2-4 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27.09.2018 | 09.10.2018 |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
|---|
| PCT/JP2018/031103 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-1925 A (HONDA MOTOR CO., LTD.) 09 January 2001, paragraphs [0047], [0048], fig. 14 & US 6338022 B1, specification column 8, lines 24-61, fig. 14 & DE 10029874 A1 | 3-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010155545 A